(19) Europäisches Patentamt / European Patent Office / Office européen des brevets

(11) **EP 3 892 164 B1**

(12) **EUROPEAN PATENT SPECIFICATION**

(45) Date of publication and mention
of the grant of the patent:
**15.11.2023 Bulletin 2023/46**

(21) Application number: **19892469.8**

(22) Date of filing: **29.11.2019**

(51) International Patent Classification (IPC):
*A47G 19/22* (2006.01)   *B32B 29/00* (2006.01)
*B32B 1/08* (2006.01)   *D21H 27/32* (2006.01)

(52) Cooperative Patent Classification (CPC):
**D21H 27/00; A47G 21/18; B32B 1/08; B32B 7/12;**
**B32B 29/005; D21H 27/10; D21H 27/32;**
A47G 2400/10; B32B 2250/02; B32B 2250/03;
B32B 2250/04; B32B 2250/05; B32B 2250/26;
B32B 2307/546; B32B 2307/72;   (Cont.)

(86) International application number:
**PCT/JP2019/046864**

(87) International publication number:
**WO 2020/116354 (11.06.2020 Gazette 2020/24)**

(54) **PAPER TUBE AND PAPER TUBE BASE-PAPER**

PAPIERHÜLSE UND BASISPAPIER FÜR PAPIERHÜLSE

TUBE EN PAPIER ET PAPIER DE BASE DE TUBE EN PAPIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2018 JP 2018228014**

(43) Date of publication of application:
**13.10.2021 Bulletin 2021/41**

(73) Proprietor: **Nippon Paper Industries Co., Ltd.
Tokyo 114-0002 (JP)**

(72) Inventors:
• **YAMAMOTO, Junji
Tokyo 114-0002 (JP)**
• **FUJITA, Kohei
Tokyo 114-0002 (JP)**

(74) Representative: **Grünecker Patent- und
Rechtsanwälte
PartG mbB
Leopoldstraße 4
80802 München (DE)**

(56) References cited:
JP-A- 2001 063 720   JP-A- 2002 201 598
JP-A- 2006 168 283   JP-A- 2009 233 348
JP-U- 3 218 847

(52) Cooperative Patent Classification (CPC): (Cont.)
     B32B 2307/7265; B32B 2307/732; B32B 2597/00

## Description

### Technical Field

The present invention relates to a paper tube offering excellent rigidity.

### Background Art

Plastics are widely used as materials for various products because they are inexpensive and can be formed easily, and at least 300 million tons of plastic products are produced annually.

Although many plastic products are properly disposed of, some enter the environment as waste due to mismanagement or illegal dumping, and eventually flow into the oceans. It is estimated that at least eight million tons of plastic waste ends up in the oceans per year, and a lot of this plastic waste, being non-biodegradable in nature, is almost entirely accumulated in the oceans.

Efforts are underway to prevent environmental destruction caused by plastic waste, and there are calls for replacing disposable plastic products with materials having lower environmental impact. In particular, environmental protection groups, etc., are calling for a ban on using plastic straws that are consumed by over 500 million units just in the United States or over one billion units around the world every day and reportedly causing deaths by accidental ingestion in sea birds and sea turtles.

Along with biodegradable plastics, paper is drawing attention as an alternative material for plastic straws that has lower environmental impact.

For example, paper straws are proposed in Patent Literatures 1 and 2. However, paper straws present problems in that they are less rigid and bend more easily than plastic straws. Also, in Patent Literature 3, a utensil paper demonstrating improved resistance to water and hot water, as well as stir sticks, spoons and other utensils using such utensil paper, are proposed.

Patent Literature 3 proposes a utensil paper for use as stir sticks and spoons. Because it is used as stir sticks and spoons, the utensil paper in Patent Literature 3 requires water resistance, heat resistance, and rigidity; however, this utensil paper is too rigid to be rolled into a tube with ease.

### Background Art Literature

#### Patent Literature

Patent Literature 1: Japanese Patent Laid-open No. Hei 06-133840
Patent Literature 2: Japanese Patent Laid-open No. 2009-233348
Patent Literature 3: Japanese Patent Laid-open No. 2006-168283

## Summary of the Invention

### Problems to Be Solved by the Invention

An object of the present invention is to provide a paper tube offering excellent rigidity.

### Means for Solving the Problems

The means for achieving the object of the present invention are as follows:

1. A paper tube characterized in that:

    it has two or more but no more than five paper layers;
    its outermost layer or innermost layer, or both, among the paper layers, has a density of 0.90 $g/cm^3$ or higher; and
    its modulus of elasticity as measured by the 3-point bending test is 2.0 GPa or higher.

2. The paper tube according to 1, characterized in that its ash content as measured by the 525°C combustion method described in JIS-P 8251 is 1.5% by mass or lower.

3. The paper tube according to 1 or 2, characterized in that the density of the outermost layer is 0.90 $g/cm^3$ or higher.

4. The paper tube according to any one of 1 to 3, characterized in that its outer diameter is 3 mm or greater but no greater than 20 mm.

5. The paper tube according to any one of 1 to 4, characterized in that its modulus of elasticity as measured by the 3-point bending test is 10.0 GPa or lower.

**Effects of the Invention**

The paper tube proposed by the present invention is primarily paper and has lower environmental impact. The paper tube proposed by the present invention is high in modulus of elasticity and therefore it has excellent rigidity and is resistant to bending during use. Accordingly, the paper tube proposed by the present invention can be used suitably for straws, stir sticks, and other paper tubes that come in contact with beverages and mouths (hereinafter also referred to as "paper utensil tubes").

The paper tube having a high-density paper layer as its outermost layer demonstrates a higher modulus of elasticity and better rigidity. Because a high-density paper prevents water from permeating it easily, a paper tube offering excellent water resistance can be obtained by constituting its outermost layer with a high-density paper. Furthermore, this paper tube produces less sticking feel on the tongue and lips when held in the mouth, and thus can be used as a straw without causing any unpleasant sensation.

Additionally, the paper tube of lower ash content has strong inter-fiber bonds and thus can demonstrate a higher modulus of elasticity and also prevent inorganic components from eluting easily even when immersed in acidic or alkaline liquids, which makes it suitable as a paper utensil tube.

**Mode for Carrying Out the Invention**

<Paper Tube>

The paper tube proposed by the present invention is characterized in that: it has two or more but no more than five paper layers; its outermost layer or innermost layer, or both, among these paper layers, has a density of 0.90 $g/cm^3$ or higher; and its modulus of elasticity as measured by the 3-point bending test is 2.0 GPa or higher.

Modulus of elasticity is a value expressing how unlikely a material is to deform, where the higher the modulus of elasticity, the more unlikely the material is to deform. The modulus of elasticity of a material is a value dependent on the material, and not on its cross-section shape.

In this Specification, the modulus of elasticity is calculated by Formula (1) below:

$$\text{Modulus of elasticity: } E = (L^3/48I) \times (P/y) \quad \text{Formula (1)}$$

L: Measurement span (Distance between the support points in 3 -point bending)
I: Second moment of area
P/y: Slope of the stress vs. strain curve in the elastic deformation region

The second moment of area (I) of a material is a value dependent on its cross-section shape and, for example, the second moment of area of a paper tube, assuming that it is a cylinder, is expressed by Formula (2) below:

$$\text{Second moment of area: } I = (\pi/64) \times (D^4-d^4) \quad \text{Formula (2)}$$

D: Outer diameter of the cylinder (Diameter of the mandrel + Total thickness of the base paper for paper tube x 2)
d: Inner diameter of the cylinder (Diameter of the mandrel)

Also, in the stress vs. strain curve in the elastic deformation region (P/y), the stress (P) is expressed by Formula (3) below:

$$\text{Stress: } P = M/Z \quad \text{Formula (3)}$$

M: Bending moment
Z: Modulus of section, calculated by $Z = (\pi/32) \times (D^4-d^4)$ for a cylinder

As is evident from Formulas (1) to (3), where $(D^4\text{-}d^4)$ derived from the cross-section shape is canceled out between the denominator and the numerator on the right side of Formula (1), the modulus of elasticity of a material is a value not dependent on its cross-section shape.

A high-density paper, which has been compressed with high force by a press, calender, etc., to cause the fibers to adhere more closely together, has strong inter-fiber bonds and thus demonstrates excellent strength. Also, a high-density paper is less likely to deform, and thus is higher in modulus of elasticity, compared to a low-density paper. By using a high-density, high-strength paper for the outermost layer or inner most layer, or both, of a paper tube, a paper tube of high modulus of elasticity can be manufactured. In the interest of manufacturing a paper tube of even higher modulus of elasticity, the density of the outermost layer or innermost layer, or both, among the paper layers, is preferably 0.92 g/cm$^3$ or higher, or more preferably 0.95 g/cm$^3$ or higher. It should be noted that, under the present invention, the density of other layers, among the paper layers, is not limited in any way.

The paper tube proposed by the present invention, whose modulus of elasticity as measured by the 3-point bending test (hereinafter also referred to simply as "modulus of elasticity") is 2.0 GPa or higher, is less likely to deform and thus less likely to bend. Under the present invention, the modulus of elasticity of the paper tube is preferably 2.6 GPa or higher, or more preferably 2.8 GPa or higher. It should be noted that, although the upper limit of the modulus of elasticity of the paper tube proposed by the present invention is not limited in any way, this upper limit is preferably around 4.5 GPa or lower when the paper tube is manufactured solely from paper layers and an adhesive for bonding them, or preferably around 10.0 GPa or lower when the paper tube has layers other than paper layers (such as water-resistant layers constituted by a water-resistant varnish, water-resistant resin, etc.).

Here, when the paper tube undergoes elastic deformation to be bent, the outermost layer deforms by the largest amount. This is why, in the interest of preventing the paper tube from deforming (buckling), preferably the density of the outermost layer is 0.90 g/cm$^3$ or higher. Also, because a high-density paper prevents water from permeating it easily, the paper tube whose outermost layer has a density of 0.90 g/cm$^3$ or higher demonstrates improved water resistance and also produces less sticking feel on the lips and tongue when held in the mouth, and thus can be used suitably as a straw.

Preferably the paper tube proposed by the present invention has an ash content, as measured by the 525°C combustion method described in JIS-P 8251, of 1.5% by mass or lower. A paper tube of lower ash content contains less filler in its paper layers and has more bonds between pulp fibers (inter-fiber bonds) constituting the paper layers, and can therefore demonstrate excellent strength of the paper layers and a higher modulus of elasticity. Furthermore, a paper tube of lower ash content causes minimal elution of inorganic components even when immersed in acidic or alkaline liquids, which makes it suitable as a paper utensil tube. Under the present invention, the aforementioned ash content is more preferably 1.0% by mass or lower, or yet more preferably 0.8% by mass or lower, or most preferably 0.5% by mass or lower.

In the paper tube proposed by the present invention, the total thickness of the paper layers comprising two or more but no more than five papers attached together is preferably 150 μm or greater but no greater than 600 μm. It should be noted that the total thickness of the paper layers in the paper tube proposed by the present invention represents the total thickness of the two or more but no more than five papers plus the adhesive bonding these papers, and if the paper tube is formed by spiral rolling, it represents the thickness measured by avoiding the stepped parts. The greater the total thickness of the paper layers, the higher the modulus of elasticity becomes; however, paper layers with a total thickness exceeding 600 μm may be difficult to roll into a paper tube. If the total thickness of the paper layers is under 150 μm, on the other hand, the modulus of elasticity required by the present invention may not be satisfied. The lower limit of the total thickness of the paper layers is preferably 170 μm or higher, or more preferably 200 μm or higher. Also, the upper limit of the total thickness of the paper layers is preferably 550 μm or lower, or more preferably 500 μm or lower, or yet more preferably 450 μm or lower.

In the paper tube proposed by the present invention, the thickness of the paper constituting each of the paper layers may be the same or different. It should be noted, however, that preferably the paper constituting the outermost layer has a thickness of 80 μm or smaller because, this way, the height gap at the overlapping parts of the paper in the width direction of the paper becomes smaller when a paper tube is formed by spiral rolling, and consequently a smoother paper tube can be formed.

The paper tube proposed by the present invention has two or more but no more than five paper layers. The smaller the number of stacked layers, the higher the water resistance of the paper layers becomes; however, the reliability of the paper layers drops because rolling them into a paper tube of small diameter becomes difficult. From the viewpoints of water resistance and rollability, preferably there are three or more but no more than five paper layers when only one of the outermost layer and innermost layer is constituted by a paper whose density is 0.90 g/cm$^3$ or higher, and preferably there are four or five layers when both the outermost layer and innermost layer are constituted by a paper whose density is 0.90 g/cm$^3$ or higher.

Under the present invention, the paper tube shape is not limited in any way and may be cylinder, polygonal cylinder, etc. Cylinder-shaped paper tubes are easy to manufacture. Polygonal cylinder-shaped paper tubes can be stored in a compact manner by setting one diagonal line across their cross-section shape as a reference so that the sum of the lengths of the sides on one side of this line becomes equal to the sum of the lengths of the sides on the other side of it, and compressing the paper tubes along this diagonal line, which serves as the center line, into flat sheets.

The thickness of the paper tube proposed by the present invention is not limited in any way, and any of various thicknesses may be adopted according to the purpose of use of the paper tube. Because of its excellent rigidity and resistance to bending, the paper tube proposed by the present invention can be suitably used as a paper utensil tube, for example. Particularly when the paper tube proposed by the present invention is used as a straw, preferably it is a cylinder with an outer diameter of 3 mm or greater but no greater than 20 mm, where this outer diameter is more preferably 4 mm or greater but no greater than 15 mm, or yet more preferably 6 mm or greater but no greater than 10 mm.

<Method for Manufacturing>

The method for manufacturing the paper tube proposed by the present invention is not limited in any way and it may be manufactured according to spiral rolling, flat rolling, or other known method; however, spiral rolling is preferred because it permits continuous production.

<Base Paper for Paper Tube>

The base paper for paper tubes from which to manufacture the paper tube proposed by the present invention has two or more but no more than five paper layers and its outermost layer or innermost layer, or both, among these paper layers, has a density of 0.90 g/cm$^3$ or higher. By using such base paper for paper tube, a paper tube offering excellent rigidity can be manufactured.

• Paper

The paper comprises pulp, various auxiliary agents, etc.

If the base paper for paper tubes proposed by the present invention is used as a base paper for paper utensil tubes, preferably paper materials that have been approved as food additives, or are FDA-certified or otherwise conforming to the food safety regulations, are used.

For the pulp, any of known pulps may be compounded and used as deemed appropriate, such as: needle bleached kraft pulp (NBKP), needle unbleached kraft pulp (NUKP), leaf bleached kraft pulp (LBKP), leaf unbleached kraft pulp (LUKP), sulfite pulp (SP) and other wood chemical pulps; ground pulp (GP), refiner ground pulp (RGP), stone ground pulp (SGP), chemi-ground pulp (CGP), semi-chemical pulp (SCP), thermomechanical pulp (TMP), chemi-thermomechanical pulp (CTMP) and other wood mechanical pulps; non-wood pulps obtained from kenaf, bagasse, bamboo, hemp, straw, etc.; and used paper pulps obtained by removing from used paper, which is used as raw material, any inks contained in the used paper by means of a deinking process.

It should be noted that, if the paper tube proposed by the present invention is used as a paper utensil tube, LBKP, NBKP, or other chemical pulp resistant to mixing-in of foreign objects is preferred, and the compounding quantity of used paper pulp is preferably small. To be specific, the compounding quantity of chemical pulp is preferably 80% by mass or higher, or more preferably 90% by mass or higher, or yet more preferably 95% by mass or higher, or most preferably 100% by mass, relative to the total quantity of pulp.

For the filler, any of known fillers may be used, such as: talc, kaolin, calcined kaolin, clay, ground calcium carbonate, precipitated calcium carbonate, white carbon, zeolite, magnesium carbonate, barium carbonate, titanium dioxide, zinc oxide, silicon oxide, amorphous silica, aluminum hydroxide, calcium hydroxide, magnesium hydroxide, zinc hydroxide, barium sulfate, calcium sulfate, and other inorganic fillers; and urea-formalin resin, polystyrene resin, phenol resin, fine hollow particles, and other organic fillers. It should be noted that the filler is not an essential material and need not be used. The ash content of the paper tube as measured by the 525°C combustion method described in JIS-P 8251 generally comes from ash derived from the filler and ash derived from the inorganic content in the pulp. To keep the content of this ash to 1.5% by mass or lower, preferably the use quantity of the filler is reduced, or more preferably no filler is used.

For the various auxiliary agents, any auxiliary agents may be selected and used as deemed appropriate, where examples can include: rosin, alkyl ketene dimer (AKD), alkenyl succinate anhydride (ASA), or other sizing agent, polyacrylic amide polymer, polyvinyl alcohol polymer, cationized starch, any of various other modified starches, urea-formalin resin, melamine-formalin resin, or other dry paper strength enhancing agent, wet paper strength-enhancing agent, yield improving agent, drainage aids, coagulating agent, aluminum sulfate, bulking agent, dye, fluorescent whitening agent, pH adjuster, defoaming agent, ultraviolet protective agent, fading inhibitor, pitch controlling agent, and slime controlling agent.

Under the present invention, preferably the paper contains a wet paper strength-enhancing agent. For the wet paper strength-enhancing agent, polyamide polyamine epichlorohydrin resin, polyamine epichlorohydrin resin, polyamide epichlorohydrin resin, polyvinyl amine resin, polyethylene imine resin, etc., may be used. Among these, polyamide polyamine epichlorohydrin resin is preferred.

The wet paper strength-enhancing agent is added during the manufacturing process by preferably 0.1% by mass or more but no more than 1.5% by mass, or more preferably 0.5% by mass or more but no more than 1.0% by mass, relative to the total pulp.

The quantity of wet paper strength-enhancing agent can be determined by the Kjeldahl method, energy dispersive X-ray analysis, or other element analysis. Under the present invention, the quantity of wet paper strength-enhancing agent contained in the paper layers represents an equivalent value assuming that the entire quantity of nitrogen determined using the Kjeldahl method is derived from polyamide polyamine epichlorohydrin resin. Preferably the paper contains a wet paper strength-enhancing agent by 0.05% by mass or more but no more than 0.70% by mass relative to the total quantity of pulp.

• Adhesive

For the adhesive, any known adhesive may be used without any limitation; if the paper tube is used as a paper utensil tube, however, preferably a water-soluble adhesive or water-dispersible adhesive ensuring a high level of safety is used. Furthermore, a water-dispersible adhesive is more preferred in that, by increasing its solids content concentration, the time from adhesive application to water volatilization and manifestation of adhesive strength can be shortened. Use of a water-dispersible adhesive requiring a shorter time to manifestation of adhesive strength can effectively prevent delamination between paper layers immediately after manufacturing. Also, the curing process after sticking the papers can be shortened or eliminated.

Water-soluble adhesives include, for example, water-soluble adhesives based on polyvinyl alcohol, polyethylene oxide, polyacrylic amide, starch, gelatin, casein, ether cellulose, phenol resin, water glass, etc. Also, water-dispersible adhesives include water-dispersible adhesives based on acrylic, vinyl acetate, ethylene-vinyl acetate copolymer, styrene-butadiene copolymer, urethane, $\alpha$-olefin, etc. Among these, preferred water-soluble adhesives are those based on polyvinyl alcohol and phenol resin, while preferred water-dispersible adhesives are those based on acrylic and styrene-butadiene copolymer, because these adhesives have a low rate of elution to water.

<Papermaking and Bonding Methods>

The method for manufacturing papers (papermaking) and type of paper machine are not limited in any way, and a Fourdrinier paper machine, twin-wire paper machine, cylinder paper machine, gap former, hybrid former (on-top former) or any other known manufacturing (papermaking) method/paper machine can be selected.

Also, the papermaking pH level may be in the acidic region (acidic papermaking), pseudo-neutral region (pseudo-neutral papermaking), neutral region (neutral papermaking) or alkaline region (alkaline papermaking), and an alkaline chemical may also be applied on the paper layer surface after the papermaking has been performed in the acidic region.

The method for bonding papers to form paper layers is not limited in any way, and it may be, for example, a method whereby papers obtained through papermaking and drying processes are cut to a prescribed width and then bonded, or a method whereby papers obtained through the papermaking process are bonded while wet and then dried and cut.

**Examples**

The present invention is explained using examples below; it should be noted, however, that the present invention is not limited to the following examples.

Table 1 below shows the densities and paper thicknesses of the papers used. It should be noted that none of the papers used contained a filler.

[Table 1]

| | | Density $g/m^3$ | Paper thickness $\mu m$ |
|---|---|---|---|
| Paper layers | A | 1.00 | 30 |
| | B | 0.85 | 120 |
| | C | 0.75 | 130 |

"Example 1"

Paper layers A, B, and C were coated with a water-dispersible adhesive (acrylic-based) to a solids content of 20 g/m² between each pair of layers and then stacked, spiral-rolled and bonded around a mandrel of 6 mm in diameter in the order of A/B/C from the innermost layer side, to obtain a cylinder-shaped paper tube made of a base paper for paper tubes with a total thickness of 318 μm.

"Example 2"

A paper tube made of a base paper for paper tubes with a total thickness of 360 μm was obtained in the same manner as in Example 1, except that paper layers A and B were stacked in the order of A/B/B/A from the innermost layer side.

"Example 3"

A paper tube made of a base paper for paper tubes with a total thickness of 381 μm was obtained in the same manner as in Example 1, except that paper layers A and C were stacked in the order of A/C/C/A from the innermost layer side.

"Example 4"

A paper tube made of a base paper for paper tubes with a total thickness of 310 μm was obtained in the same manner as in Example 1, except that paper layers A and B were stacked in the order of B/B/I/A from the innermost layer side.

"Comparative Example 1"

A paper tube made of a base paper for paper tubes with a total thickness of 399 μm was obtained in the same manner as in Example 1, except that paper layers B were stacked in the order of B/B/B from the innermost layer side.

"Comparative Example 2"

A paper tube made of a base paper for paper tubes with a total thickness of 430 μm was obtained in the same manner as in Example 1, except that paper layers C were stacked in the order of C/C/C from the innermost layer side.
The paper tubes obtained in Examples 1 to 4 and Comparative Examples 1, 2 were evaluated as follows. The results are shown in Table 2.

<Modulus of Elasticity>

After production, each paper tube was dried/seasoned (curing process) for one week at room temperature, and then humidity-conditioned according to the method specified in JIS-P 8111: 1998. Following the humidity conditioning, the paper tube was cut to a length of 100 mm to produce a test sample, which was then subjected to a bending test according to the 3-point bending method in the manner described below, to calculate the modulus of elasticity.

> 1. Place the test sample across the support points set apart by 70 mm, and then drop the indenter of 3.18 mm in radius positioned above the test sample, to a position equidistant from the two support points (35 mm away from each support point) at a speed of 10 mm/min.

> 2. Record a graph (stress vs. strain curve) showing the relationship between the depth of indentation produced by the indenter and the stress, and check its slope in the elastic deformation region (region in which the relationship of stress and strain is linear).

> 3. Calculate the modulus of elasticity according to Formula (1) above. It should be noted that, since the paper tubes manufactured in these examples are cylinders, use Formula (2) above for the second moment of area.

<Ash Content>

Measured in accordance with the ash content test method (525°C combustion method) specified in JIS-P 8251: 2003.

[Table 2]

| | Paper layers | | Total thickness ($\mu$m) | Density | | Modulus of elasticity (GPa) | Ash content (%) |
|---|---|---|---|---|---|---|---|
| | Innermost layer | Outermost layer | | Innermost layer | Outermost layer | | |
| Example 1 | A/B/C | | 318 | 1.00 | 0.75 | 2.39 | 0.47 |
| Example 2 | A/B/B/A | | 360 | 1.00 | 1.00 | 3.16 | 0.66 |
| Example 3 | A/C/C/A | | 381 | 1.00 | 1.00 | 2.93 | 0.24 |
| Example 4 | B/B/A | | 310 | 0.85 | 1.00 | 2.91 | 0.39 |
| Comparative Example 1 | B/B/B | | 399 | 0.85 | 0.85 | 1.47 | 0.89 |
| Comparative Example 2 | C/C/C | | 430 | 0.75 | 0.75 | 1.48 | 0.29 |

The paper tubes conforming to the present invention, characterized by a density of 0.90 g/cm$^3$ or higher in the outermost layer or innermost layer, or both, among the paper layers, had a high modulus of elasticity of 2.0 GPa or higher, and demonstrated excellent rigidity.

By contrast, the Comparative Examples characterized by a density of under 0.90 g/cm$^3$ in both the outermost layer and innermost layer, among the paper layers, had a modulus of elasticity of under 2.0 GPa, and exhibited poor rigidity.

**Claims**

1. A paper tube **characterized in that**:

   it has two or more but no more than five paper layers;
   an outermost layer or innermost layer, or both, among the paper layers, has a density of 0.90 g/cm$^3$ or higher; and
   a modulus of elasticity as measured by the 3-point bending test is 2.0 GPa or higher.

2. The paper tube according to claim 1, **characterized in that** an ash content as measured by the 525°C combustion method described in JIS-P 8251 is 1.5% by mass or lower.

3. The paper tube according to claim 1 or 2, **characterized in that** a density of the outermost layer is 0.90 g/cm$^3$ or higher.

4. The paper tube according to any one of claims 1 to 3, **characterized in that** an outer diameter is 3 mm or greater but no greater than 20 mm.

5. The paper tube according to any one of claims 1 to 4, **characterized in that** a modulus of elasticity as measured by the 3-point bending test is 10.0 GPa or lower.

**Patentansprüche**

1. Papierhülse, **dadurch gekennzeichnet, dass**:

   sie zwei oder mehr, aber nicht mehr als fünf, Papierschichten aufweist;
   die äußerste Schicht oder die innerste Schicht oder beide unter den Papierschichten eine Dichte von 0,90 g/cm$^3$ oder höher aufweisen; und
   ein Elastizitätsmodul, gemessen durch den 3-Punkt Biegetest, 2,0 GPa oder höher beträgt.

2. Papierhülse nach Anspruch 1, **dadurch gekennzeichnet, dass** der Aschegehalt, gemessen durch das Verbrennungsverfahren bei 525 °C, beschrieben in JIS-P 8251, 1,5 Massen-% oder weniger beträgt.

3. Papierhülse nach Anspruch 1 oder 2, **dadurch gekennzeichnet, dass** die Dichte der äußersten Schicht 0,90 g/cm$^3$

oder höher ist.

**4.** Papierhülse nach einem der Ansprüche 1 bis 3, **dadurch gekennzeichnet, dass** der Außendurchmesser 3 mm oder größer, jedoch nicht größer als 20 mm beträgt.

**5.** Papierhülse nach einem der Ansprüche 1 bis 4, **dadurch gekennzeichnet, dass** ein Elastizitätsmodul, gemessen durch den 3-Punkt Biegetest, 10,0 GPa oder weniger beträgt.

**Revendications**

**1.** Tube en papier **caractérisé en ce que** :

le tube comporte entre deux et cinq couches de papier ;
parmi les couches de papier, la couche la plus externe et/ou la couche la plus interne a/ont une densité supérieure ou égale à 0,90 g/cm$^3$ ; et
le module d'élasticité, tel que mesuré par un essai de flexion 3 points, est supérieur ou égal à 2,0 GPa.

**2.** Tube en papier selon la revendication 1, **caractérisé en ce que** le taux de cendres, tel que mesuré par le procédé de combustion à 525 °C décrit dans la norme JIS-P 8251, est inférieur ou égal à 1,5 % en masse.

**3.** Tube en papier selon la revendication 1 ou 2, **caractérisé en ce que** la densité de la couche la plus externe est supérieure ou égale à 0,90 g/cm$^3$.

**4.** Tube en papier selon l'une quelconque des revendications 1 à 3, **caractérisé en ce que** son diamètre externe est supérieur ou égal à 3 mm et inférieur ou égal à 20 mm.

**5.** Tube en papier selon l'une quelconque des revendications 1 à 4, **caractérisé en ce que** le module d'élasticité, tel que mesuré par un essai de flexion 3 points, est inférieur ou égal à 10,0 GPa.

**EP 3 892 164 B1**

## REFERENCES CITED IN THE DESCRIPTION

**Patent documents cited in the description**

- JP HEI06133840 A
- JP 2009233348 A
- JP 2006168283 A